Europäisches Patentamt

European Patent Office

Office européen des brevets

(19)

(11) Numéro de publication: **0 232 193**
**B1**

(12) **FASCICULE DE BREVET EUROPEEN**

(45) Date de publication du fascicule du brevet:
**12.04.89**

(51) Int. Cl.⁴: **A01K 1/01**, B65F 1/12

(21) Numéro de dépôt: **87400036.7**

(22) Date de dépôt: **09.01.87**

(54) **Bac domestique.**

(30) Priorité: **15.01.86 FR 8600495**

(43) Date de publication de la demande:
**12.08.87 Bulletin 87/33**

(45) Mention de la délivrance du brevet:
**12.04.89 Bulletin 89/15**

(84) Etats contractants désignés:
**AT BE CH DE ES FR GB GR IT LI NL SE**

(56) Documents cités:
**DE-C- 82 863**
**FR-A- 799 323**
**US-A- 3 735 735**

(73) Titulaire: **Jaillet, Jeannine, 19, Boulevard de Bercy,
F-75012 Paris(FR)**
Titulaire: **Jaillet, Georges, 19, Boulevard de Bercy,
F-75012 France(FR)**

(72) Inventeur: **Jaillet, Jeannine, 19, Boulevard de Bercy,
F-75012 Paris(FR)**
Inventeur: **Jaillet, Georges, 19, Boulevard de Bercy,
F-75012 France(FR)**

(74) Mandataire: **Fruchard, Guy et al, CABINET
BOETTCHER 23, rue la Boétie, F-75008 Paris(FR)**

## Description

La présente invention concerne un bac domestique servant au transport et au déchargement de produits divers notamment, bien que non exclusivement, des déchets, en particulier une litière pour chats.

Il existe de nombreux cas où l'on utilise un bac domestique pour le transport et le déchargement de produits divers. En particulier, pour la collecte des excréments de chat on prévoit généralement un bac domestique dans lequel est disposée une litière formée de granulés destinés à absorber les excréments liquides et à envelopper les excréments solides par adhérence sur ceux-ci. Lorsqu'un chat a déposé des excréments dans la litière, il remue celle-ci afin de les enrober avec les granulés de la litière. Dans ce mouvement, il est fréquent que les excréments viennent au contact du fond ou de la paroi latérale du bac et y adhèrent légèrement. Lorsqu'on veut vider le bac pour renouveler la litière, il est souvent malaisé de décoller les excréments qui ont adhéré à la paroi tout en maintenant le bac convenablement orienté pour s'assurer que l'excrément décollé tombe bien dans le récipient auquel il est destiné, par exemple une boîte à ordures ou un sac à ordures. En particulier, lorsque l'on tente de décoller les excréments en frappant le bord du bac domestique contre le bord d'une boîte à ordures, il arrive fréquemment que l'excrément se décolle au moment où le bac n'est plus au-dessus de la boîte à ordures et il est alors nécessaire de procéder à un ramassage particulièrement désagréable.

Les documents FR-A 799 323 et DE-C 82 863 décrivent des bacs domestiques, notamment pour stocker les ordures, qui comportent deux éléments de bac comprenant chacun un fond et une paroi latérale qui s'étend le long d'une partie du fond et encadre un côté de division du fond ne comportant pas de paroi latérale, des moyens de liaison articulés réunissant les deux éléments de bac selon un axe d'articulation adjacent à un bord supérieur des deux extrémités de la paroi latérale encadrant le côté de division du fond, et des moyens de retenue pour maintenir l'un contre l'autre les côtés de division du fond des deux éléments de bac associés.

Ainsi, lorsque l'on souhaite décharger le bac domestique, celui-ci est replié au niveau des moyens de liaison articulés de sorte que les produits contenus dans le bac se déversent de façon centrale. Toutefois, même avec un déversement central, il peut advenir que l'ouverture ne soit pas exactement au-dessus de la boîte à ordures de sorte que l'inconvénient mentionné ci-dessus n'est pas supprimé.

Un but de la présente invention est de proposer un bac domestique qui permette un stockage et un déchargement de produits ayant tendance à adhérer aux parois du bac, et présente une sécurité de manipulation lors du déchargement du bac.

En vue de la réalisation de ce but, on prévoit selon l'invention un bac domestique à deux éléments articulés du type mentionné ci-dessus qui comporte en outre des moyens d'accrochage de sac adjacents aux extrémités des parois latérales des deux éléments de bac et s'étendant en saillie vers l'extérieur, et un rebord s'étendant en saillie vers l'extérieur par rapport à la paroi latérale et au fond de chaque élément de bac le long d'une partie au moins du côté de division du fond et de l'extrémité adjacente de la paroi latérale.

Ainsi, quels que soient les mouvements effectués avec le bac, le sac suit ces mouvements. De plus lorsqu'on replie les deux éléments de bac après avoir accroché le sac à l'extérieur du bac, le rebord en saillie prend appui à l'intérieur du sac et écarte les parois de celui-ci de sorte qu'en claquant les éléments du bac l'un contre l'autre, on décolle aisément les produits collés aux parois sans que ceux-ci ne tombent à l'extérieur du sac.

Selon une version avantageuse de l'invention, les moyens d'accrochage de sac sont formés par les extrémités du rebord. Ainsi, non seulement un sac peut être suspendu aux extrémités du rebord mais le bord du sac repose directement sur le rebord du bac et le sac est donc largement ouvert lors du pivotement des éléments de bac l'un par rapport à l'autre.

Selon un autre aspect avantageux de l'invention, le bac comporte un organe d'appui disposé au voisinage du côté de division du fond de chaque élément de bac et s'étendant en saillie vers l'extérieur par rapport au fond. Ainsi, lorsque le bac est posé sur une surface plane, le poids des éléments de bac agit pour maintenir ceux-ci avec leur bords de division du fond accolés l'un à l'autre.

Selon encore un autre aspect avantageux de l'invention, les moyens de retenue comprennent des crochets espacés des moyens de liaison articulés, et ayant une surface de verrouillage s'étendant parallèlement à l'axe d'articulation des moyens de liaison et une ouverture latérale à une extrémité de la surface de verrouillage. Ainsi, une flexion de la paroi latérale comprise entre les moyens de liaison articulés et les crochets permet un déverrouillage de ceux-ci et un pivotement des éléments de bac l'un par rapport à l'autre.

D'autres caractéristiques et avantages de l'invention apparaîtront encore à la lumière de la description qui suit d'un mode de réalisation préféré de l'invention en liaison avec les dessins ci-joints parmi lesquels:

– la figure 1 est une vue de dessus d'un premier mode de réalisation du bac domestique selon l'invention,
– la figure 2 est une vue de côté, partiellement en coupe selon la ligne II–II de la figure 1,
– la figure 3 est une vue de dessus d'un seul élément de bac selon un second mode de réalisation de l'invention.
– la figure 4 est une vue en bout de l'élément de bac de la figure 3, selon la flèche IV de la figure 3.
– La figure 5 est une vue en coupe selon la ligne V–V de la figure 3.

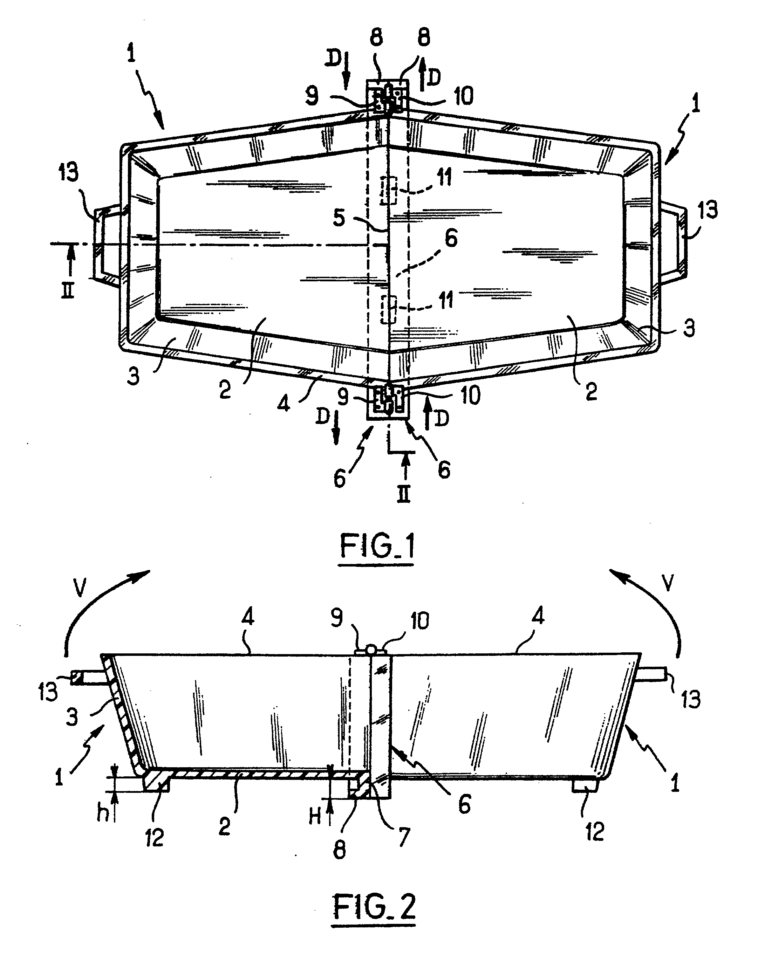

En référence aux figures 1 et 2, le bac domestique selon l'invention comporte deux éléments de bac généralement désignés en 1, comprenant chacun un fond 2 et une paroi latérale 3 s'étendant le long d'une partie du fond et inclinée vers l'extérieur depuis le fond vers le bord supérieur 4 de chaque élément du bac. Les extrémités de la paroi latérale 3 encadrent un côté de division du fond 5 ne comportant pas de paroi latérale.

Sur le mode de réalisation illustré, chaque élément de bac 1 a une forme allant en s'évasant depuis une extrémité opposée au côté de division du fond 5 vers celui-ci. Ainsi, tant en raison de l'inclinaison de la paroi latérale 3 que de l'évasement de chacun des éléments de bac 1, ceux-ci peuvent être stockés en les encastrant les uns dans les autres.

De façon adjacente aux extrémités des parois latérales 3 des éléments de bac, ceux-ci comportent des moyens d'accrochage de sac formés par un rebord profilé en L, généralement désigné en 6, comportant une première branche 7 s'étendant vers l'extérieur perpendiculairement à la paroi latérale 3 de chaque élément de bac au voisinage d'une extrémité de la paroi latérale 3, et une seconde branche 8 espacée de la paroi latérale 3 et s'étendant vers une extrémité opposée de chaque élément de bac 1. Le profilé en L 6 s'étend de préférence également sous le fond de chaque élément de bac 1.

Le bac comporte en outre des moyens de liaison articulés réunissant les deux éléments de bac 1 selon un axe d'articulation adjacent au bord supérieur 4 aux extrémités de la paroi latérale 3. Ces moyens de liaison articulés comprennent deux gonds 9 fixés sur l'un des éléments de bac 1 à la partie supérieure de la branche 7 d'un profilé en L 6 et associés à deux paumelles 10 fixées sur l'autre élément de bac 1 à la partie supérieure de la branche 7 du profilé en L 6. Les moyens de liaison articulés sont ainsi démontables par un mouvement relatif des deux éléments de bac associés 1 selon une direction D parallèle à l'axe d'articulation de ces deux éléments de bac. Afin de maintenir les éléments de bac accolés l'un à l'autre dans leur position de réception de produits, celui-ci comporte de préférence des moyens de retenue pour maintenir l'un contre l'autre les côtés de division du fond 5 de deux éléments de bac associés. Ces moyens de retenue sont par exemple formés par des loquets magnétiques 11 divisés en 2 parties, chaque partie de loquet étant fixée à l'un des éléments de bac 1 en regard d'une partie correspondante portée par l'autre élément de bac; par exemple, les parties de loquet magnétique sont fixées dans des cavités réalisées dans la première branche 7 du profilé en L 6.

On remarque que la partie des profilés 6 qui s'étend sous le fond 1 des éléments de bac forme un organe d'appui disposé au voisinage du côté de division du fond 5 de chaque élément de bac et s'étendant en saillie vers l'extérieur par rapport au fond. Sur ce mode de réalisation, le bac comporte des pieds 12 disposés aux extrémités des éléments de bac et ayant une hauteur h inférieure à la hauteur H du profilé 6 formant organe d'appui. Aux extrémités des éléments de bac 1, des poignées de préhension 13 s'étendent horizontalement vers l'extérieur à partir de la paroi latérale 3.

Le fonctionnement du bac selon l'invention est le suivant: les deux éléments de bac étant associés par les moyens de liaison articulés, et maintenus accolés par les moyens de retenue, le bac se présente sous la forme d'un récipient propre à recevoir des produits, par exemple une litière pour chat. On remarque qu'en raison de la disposition et de la hauteur relative de l'organe d'appui formé par le profilé 6 et les pieds 12, le poids des éléments de bac agit sur l'articulation des moyens de liaison pour maintenir les éléments de bac accolés. Lorsque l'on souhaite vider le bac, il suffit d'amener celui-ci au-dessus du récipient destiné à recevoir les produits contenus dans le bac et d'exercer sur les poignées 13 une force dirigée selon les flèches V de la figure 2 tendant à ramener les bords supérieurs 4 des éléments de bac 1 l'un vers l'autre, ce qui provoque une ouverture du fond du bac le long des lignes de division du fond 5 et permet la décharge. Si des produits stockés restent collés au fond du bac ou à la paroi latérale de celui-ci, on fait claquer l'un contre l'autre les bords supérieurs 4 des éléments de bac 1 et l'on produit ainsi une onde de choc qui décolle les produits. Dans le cas où l'on souhaite vider le bac dans un sac souple, on accroche de préférence deux extrémités opposées de l'ouverture du sac à la partie supérieure des secondes branches 8 des profilés 6 et le sac pend naturellement sous le bac dont le côté de division du fond 5 se trouve encadré par les bords de l'ouverture du sac. Dans ce cas, lorsque l'on rabat les bords supérieurs 4 des éléments de bac 1 l'un vers l'autre, la seconde branche 8 de la partie de profilé 6 qui s'étend sous le fond 2 s'appuie sur les bords de l'ouverture du sac et maintient ceux-ci écartés pour recevoir le produit.

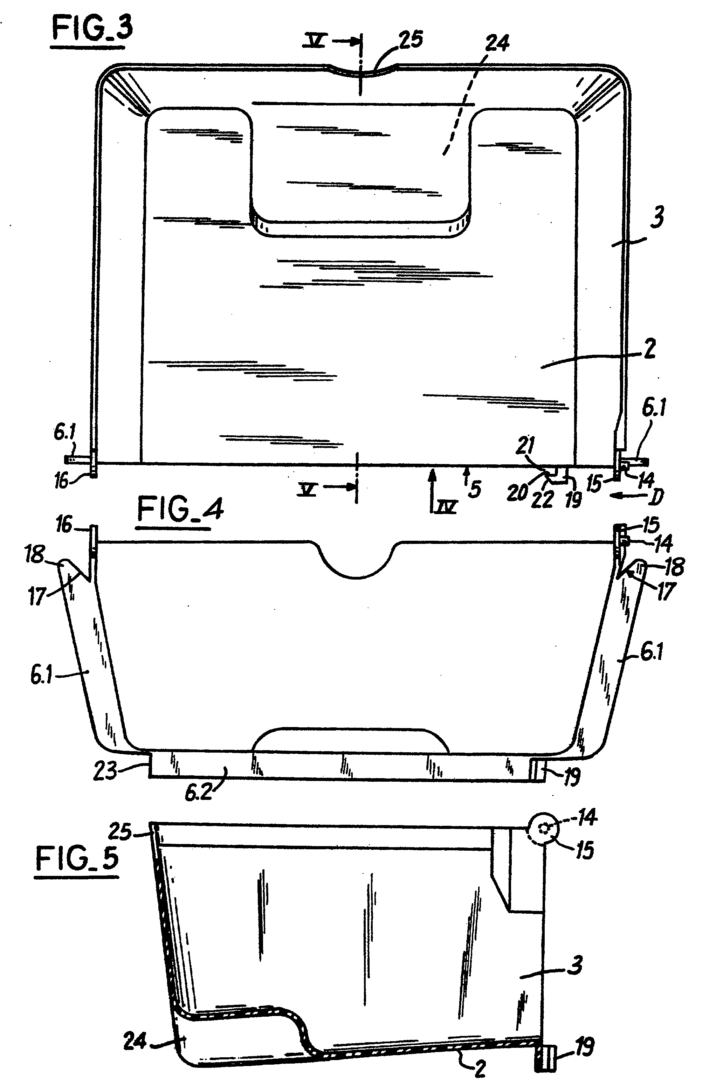

Les figures 3 à 5 illustrent un second mode de réalisation du bac selon l'invention. Comme dans le premier mode de réalisation, chaque élément de bac comporte un fond 2 partiellement entouré par une paroi latérale 3 dont les extrémités coïncident avec un bord de division du fond 5. Les moyens de liaison articulés comportent cette fois un ergot 14 porté par une oreille 15 à un coin supérieur de la paroi latérale 3 et s'engageant, lors du montage, dans un trou d'une oreille 16 disposée à l'autre extrémité de la paroi latérale 3 sur l'élément de bac associé. De même que dans le cas des figures 1 et 2, les deux éléments de bac sont identiques, ce qui simplifie beaucoup la fabrication.

Dans ce second mode de réalisation de l'invention les moyens d'accrochage de sac comportent trois parties de rebord plan. Deux parties de rebord 6.1 s'étendent le long des bords extrêmes de la paroi latérale 3 et sont en saillie vers l'extérieur par rapport à cette paroi latérale. La troisième partie de rebord 6.2 s'étend sous le fond sur une partie de la longueur de celui-ci, en saillie vers l'extérieur par rapport au fond. Les deux parties de rebord 6.1 s'étendant le long de la paroi latérale comportent à leur extrémité supérieure, au voisinage des moyens de liaison, un bord incliné 17 formant une dent 18 tournée vers le haut et permettant un meilleur maintien d'un sac souple lors de sa mise en place avant le déchargement du bac.

Les moyens de retenue des éléments de bac l'un contre l'autre comprennent un crochet 19 sur chaque élément de bac. Chaque crochet 19 s'étend en saillie à partir d'une extrémité de la partie de rebord 6.2 et comporte une surface de verrouillage 20 s'étendant parallèlement à l'ergot 14 et délimitant avec la partie de rebord 6.2 une ouverture latérale 21 à une extrémité de la surface de verrouillage 20. L'ouverture latérale 21 est tournée dans une direction identique à la direction de démontage D des moyens de liaison articulés. Ce crochet comporte en outre une surface externe biseautée 22 au voisinage de son extrémité libre. Les dimensions du crochet 19 sont telles que lors du montage, sa partie biseautée 22 vient en regard du bord extrême opposé 23 de la partie de rebord 6.2 de l'élément de bac associé.

On constate qu'en raison de la configuration exposée ci-dessus, les crochets 19 sont espacés des moyens de liaison articulés 14 et on peut donc déplacer latéralement l'un par rapport à l'autre deux éléments de bac associés selon une direction opposée à la direction de démontage D en faisant fléchir la partie de paroi latérale comprise entre les moyens de liaison et les crochets.

Au montage on engage chaque ergot 14 dans le trou de l'oreille 16 correspondante de l'élément de bac associé puis on rabat les deux éléments de bac l'un vers l'autre. Dès que la partie biseautée 22 des crochets 19 vient en contact du bord extrême 23 de la partie de rebord 6.2 correspondante les parois latérales fléchissent dans une direction opposée à la direction de démontage, ce qui favorise la liaison des éléments de bac et permet l'enclenchement des crochets 19 sur l'extrémité correspondante de la partie de rebord 6.2.

A son extrémité opposée au côté de division 5, le fond comporte de préférence une cavité 24 et la paroi latérale comporte une encoche 25 qui permettent de bien prendre en main chacun des éléments de bac. Pour le déchargement du bac il suffit de saisir celui-ci par ses extrémités et de repousser les éléments de bac l'un par rapport à l'autre dans une direction opposée à la direction de l'ouverture latérale 21 des crochets jusqu'au moment où ceux-ci sont dégagés de la partie de rebord correspondante 6.2. Les deux éléments de bac peuvent alors être pivotés l'un par rapport à l'autre pour obtenir l'écoulement central du produit et le maintien du sac en position ouverte par appui des parties de rebord 6.1 et 6.2 sur la paroi interne du sac.

Bien entendu, l'invention n'est pas limitée aux modes de réalisation décrits ci-dessus et on peut y apporter des variantes de réalisation qui apparaîtront à l'homme de métier. En particulier, bien que le bac représenté sur les figures ait une forme sensiblement rectangulaire, on pourra lui donner une forme polygonale ou arrondie. De même, bien que les éléments de bac représentés soient identiques, ce qui permet une fabrication en série à moindre coût, on pourra prévoir des éléments de bac de forme ou de dimension différentes.

Les moyens de retenue des éléments de bac dans leur position de récipient peuvent revêtir des formes très variées, par exemple ils peuvent être formés par des crochets fixés aux parois latérales des éléments de bac ou par des ressorts éventuellement incorporés dans des charnières assurant la liaison articulée entre les éléments de bac, ou encore être formés par des profilés encliquetables disposés le long des extrémités de la paroi latérale des éléments de bac ou le long du côté de division du fond des éléments de bac.

Bien que les avantages de l'invention aient été soulignés plus particulièrement en liaison avec l'utilisation du bac comme bac à chat, le bac selon l'invention n'est pas limité à cette application. Il peut même être réalisé avec un fond ajouré permettant l'égouttage de produits puis leur décharge dans un autre récipient sant qu'il soit nécessaire d'intervenir à la main ou avec un instrument pour décoller les produits ayant éventuellement adhéré à une paroi du bac. A ce propos on notera que le récipient peut être réalisé à partir d'un matériau quelconque, par exemple il pourra être moulé à partir d'une matière plastique.

## Revendications

1. Bac domestique comportant deux éléments de bac (1) comprenant chacun un fond (2) dont un côté dépourvu de paroi latérale est appelé côté de division du fond, tandis que le long de ses autres côtés une paroi latérale (3) s'étend à partir du fond en formant un angle par rapport au fond, encadrant de ce fait le côté de division du fond, des moyens de liaison articulés (9, 10, 14) réunissant les deux éléments de bac (1) selon un axe d'articulation adjacent à un bord supérieur (4) aux extrémités de la paroi latérale (3) encadrant le côté de division du fond (5), et des moyens de retenue (11; 19) pour maintenir l'un contre l'autre les côtés de division du fond (5) des deux éléments de bac associés, caractérisé en ce qu'il comporte des moyens d'accrochage de sac (6) adjacents aux extrémités des parois latérales (3) des deux éléments de bac (1) et s'étendant en saillie vers l'extérieur, et un rebord (6) s'étendant en saillie vers l'extérieur par rapport à la paroi latérale et au fond de chaque élément de bac le long d'une partie au moins du côté de division du fond et de l'extrémité adjacente de la paroi latérale.

2. Bac domestique selon la revendication 1 caractérisé en ce que les moyens d'accrochage de sac sont formés par les extrémités du rebord (6).

3. Bac domestique selon la revendication 1 ou la revendication 2 caractérisé en ce que le rebord à la forme d'un L (6) ayant une première branche (7) s'étendant vers l'extérieur perpendiculairement à la paroi latérale (3) de chaque élément de bac (1) au voisinage d'une extrémité de la paroi latérale, et une seconde branche (8) espacée de la paroi latérale (3) et s'étendant vers une extrémité opposée de chaque élément de bac (1).

4. Bac domestique selon la revendication 2 ou la revendication 3 caractérisé en ce qu'au voisinage des moyens de liaison articulés, le rebord comporte une extrémité formant une dent (18) tournée vers le haut.

5. Bac domestique selon l'une des revendications 1 à 4 caractérisé en ce que les moyens de liaison articulés (9, 10; 14) sont démontables par un mouvement relatif des éléments de bac (1) associés selon une direction (D) parallèle à l'axe d'articulation de ces éléments de bac (1).

6. Bac domestique selon la revendication 5 caractérisé en ce qu'il comporte un organe d'appui (6) disposé au voisinage du côté de division du fond (5) de chaque élément de bac et s'étendant en saillie vers l'extérieur par rapport au fond.

7. Bac domestique selon l'une des revendications 1 à 6 caractérisé en ce que les moyens de retenue comprennent des crochets (19) espacés des moyens de liaison articulés (14), et ayant une surface de verrouillage (20) s'étendant parallèlement à l'axe d'articulation des moyens de liaison et une ouverture latérale (21) à une extrémité de la surface de verrouillage (20).

8. Bac domestique selon la revendication 7 prise dans son rattachement à la revendication 5 caractérisé en ce que l'ouverture latérale (21) des crochets est tournée dans une direction identique à la direction de démontage (D) des moyens de liaison articulés (14).

9. Bac domestique selon la revendication 7 ou la revendication 8 caractérisé en ce que les crochets (19) d'un élément de bac sont portés par le rebord de cet élément et coopèrent avec une extrémité (23) d'une partie de rebord s'étendant le long du fond de l'élément de bac associé.

## Patentansprüche

1. Haushaltsbehälter, umfassend zwei Behälterelemente (1) mit jeweils einem Boden (2), dessen eine von einer Seitenwand freie Seite als Bodenteilungsseite bezeichnet wird, wogegen sich entlang seiner anderen Seite eine Seitenwand (3) unter Bildung eines Winkels mit dem Boden von diesem weg erstreckt und auf diese Weise die Bodenteilungsseite einfaßt, gelenkige Verbindungsmittel (9, 10, 14), welche die beiden Behälterelemente (1) entlang einer Gelenkachse nahe einem oberen Rand (4) an den Enden der die Bodenteilungsseite (5) einfassenden Seitenwand (3) verbindet, und Haltemittel (11, 19), um die Bodenteilungsseiten (5) der zusammengehörenden Behälterelemente gegeneinander zu halten, dadurch gekennzeichnet, daß er nach außen vorspringende Beutelbefestigungsmittel (6) zum Befestigen eines Beutels nahe den Enden der Seitenwände (3) der beiden Behälterelemente (1) und eine Randleiste (6) aufweist, die sich entlang mindestens eines Teils der Bodenteilungsseite und des benachbarten Endes der Seitenwand (3) erstreckt und relativ zur Seitenwand und zum Boden jedes Behälterelementes nach außen vorspringt.

2. Haushaltsbehälter nach Anspruch 1, dadurch gekennzeichnet, daß die Beutelbefestigungsmittel von den Enden der Randleiste (6) gebildet sind.

3. Haushaltsbehälter nach Anspruch 1 oder Anspruch 2, dadurch gekennzeichnet, daß die Randleiste (6) eine L-Form besitzt mit einem ersten Schenkel (7), der sich senkrecht zur Seitenwand (3) jedes Behälterelementes (1) nahe einem Ende der Seitenwand nach außen erstreckt und mit einem zweiten Schenkel (8), der sich in einem Abstand von der Seitenwand (3) zu einem entgegengesetzten Ende jedes Behälterelementes (1) erstreckt.

4. Haushaltsbehälter nach Anspruch 2 oder Anspruch 3, dadurch gekennzeichnet, daß nahe den gelenkigen Verbindungsmitteln die Randleiste ein Ende in Form eines nach oben weisenden Zahnes (18) aufweist.

5. Haushaltsbehälter nach einem der Ansprüche 1 bis 4, dadurch gekennzeichnet, daß die gelenkigen Verbindungsmittel (9, 10, 14) durch eine Relativbewegung der zusammengehörenden Behälterelemente (1) entlang einer zur Gelenkachse dieser Behälterelemente (1) parallelen Richtung demontierbar sind.

6. Haushaltsbehälter nach Anspruch 5, dadurch gekennzeichnet, daß er ein Anschlagelement aufweist, das nahe der Bodenteilungsseite (5) jedes Behälterelementes angeordnet ist und relativ zum Boden nach außen absteht.

7. Haushaltsbehälter nach einem der Ansprüche 1 bis 6, dadurch gekennzeichnet, daß die Haltemittel Haken (19) umfassen, die einen Abstand von den gelenkigen Verbindungsmitteln (14) aufweisen und eine parallel zur Gelenkachse der Verbindungsmittel gerichtete Verriegelungsfläche (20) sowie eine seitliche Öffnung (21) an einem Ende der Verriegelungsfläche (20) besitzen.

8. Haushaltsbehälter nach Anspruch 7 in Verbindung mit Anspruch 5, dadurch gekennzeichnet, daß die Seitenöffnung (21) der Haken in eine mit der Demontagerichtung der gelenkigen Verbindungsmittel (14) identische Richtung weisen.

9. Haushaltsbehälter nach Anspruch 7 oder Anspruch 8, dadurch gekennzeichnet, daß die Haken (19) eines Behälterelementes von der Randleiste dieses Elementes getragen sind und mit einem Ende (23) eines Abschnittes der Randleiste zusammenwirken, der sich entlang dem Boden des zugehörigen Behälterelementes erstreckt.

## Claims

1. A home container comprising two container elements (1) each comprising a bottom (2) an edge of which not including a side wall being designated as bottom division edge, whereas a side wall (3) extends from the bottom, along the other edges of the bottom, thus flanking the bottom division edge, hinged connection means (9, 10, 14) interconnecting the two container elements (1) about a hinge axis adjacent to a top edge (4) at ends of the side wall (3) flanking the bottom division edge (5) and retaining means (11, 19) for holding the bottom division edges (5) of the two associated container elements against each other, characterised in that it includes bag-fastening means (6) adjacent to the ends of the side walls (3) of the two container elements (1) and projecting outwardly, and a rim (6) projecting outwardly from the side wall and from the bottom of each container element along at least a portion of the bottom division edge and the adjacent end of the side wall.

2. A home container according to claim 1, characterised in that the bag fastening means are formed by the ends of the rim (6).

3. A home container according to claim 1 or claim 2, characterised in that the rim is L-shaped (6) with a first branch (7) extending outwardly perpendicu-

larly from the side wall (3) of each container element (1) in the vicinity of an end of the side wall, and a second branch (8) spaced from the side wall (3) and extending towards an opposite end of each container element (1).

4. A home container according to claim 2 or claim 3, characterised in that in the vicinity of the hinged connection means, the rim includes an end forming an upwardly directed tooth (18).

5. A home container according to one of claims 1 to 4, characterised in that the hinged connection means (9, 10, 14) are capable of being disassembled by moving the associated container elements (1) relative to each other along a direction (D) parallel to the hinge axis of said container elements (1).

6. A home container according to claim 5, characterised in that it includes a bearing member (6) disposed in the vicinity of the bottom division edge (5) of each container element and projecting outwardly from the bottom.

7. A home container according to one of claims 1 to 6, characterised in that the retaining means comprise hooks (19) spaced away from the hinged connection means (14), and having a latching surface (20) extending parallel to the hinge axis of the connection means and a side opening (21) at one end of the latching surface (20).

8. A home container according to claim 7 in view of claim 5, characterised in that the side opening (21) of the hooks is turned towards the same direction as the direction (D) for disassembling the hinged connection means (14).

9. A home container according to claim 7 or claim 8, characterised in that the hooks (19) of a container element are carried by the rim of said element and co-operate with an end (23) of a rim portion extending along the bottom of the associated container element.

FIG. 1

FIG. 2

**FIG. 3**

**FIG. 4**

**FIG. 5**